# EUROPÄISCHE PATENTSCHRIFT

(11) **EP 2 514 694 B1**
(45) Veröffentlichungstag und Bekanntmachung des Hinweises auf die Patenterteilung: **02.04.2014**
(21) Anmeldenummer: 12171329.1
(22) Anmeldetag: 30.08.2011
(51) Int. Cl.: B65G 47/256

(54) **Vorrichtung zum Ausrichten von Gegenständen**
Device for aligning objects
Dispositif d'alignement d'objets

(30) Priorität: 12.10.2010 DE 102010042333
(43) Veröffentlichungstag der Anmeldung: 24.10.2012
(62) Teilanmeldung aus: 11179350.1
(73) Patentinhaber: Krones AG, 93073 Neutraubling (DE)
(72) Erfinder: Seidl, Andreas, 93093 Donaustauf (DE)
(74) Vertreter: Grünecker, Kinkeldey, Stockmair & Schwanhäusser

(56) Entgegenhaltungen:
- EP-A1- 1 650 143
- EP-A2- 1 325 877
- EP-A2- 1 950 153
- AT-A1- 506 149
- US-A- 5 236 077
- US-B1- 7 322 458

## Beschreibung

Die Erfindung bezieht sich auf eine Vorrichtung zum Ausrichten von Gegenständen, insbesondere von Vorformlingen zur Herstellung von Kunststoffbehältern der in dem Oberbegriff des Anspruchs 1 beschriebenen Art.

Eine Vorrichtung und ein Verfahren dieser Art sind aus der EP 1 335 870 bekannt. Derartige Ausrichtvorrichtungen dienen dazu, die in einer Blasmaschine oder anderen geeigneten Vorrichtungen hergestellten Gegenstände bzw. Vorformlinge in eine bestimmte Ausrichtung zu bringen, um diese dann in dieser ausgerichteten Stellung nachfolgenden Anlagen zur Weiterbearbeitung zuzuführen. Diese Ausrichtvorrichtungen enthalten eine Ausrichtstrecke, auf der den Vorformlingen bzw. Gegenständen Gelegenheit gegeben wird, sich in eine bestimmte Ausrichtung selbst zu orientieren, gegebenenfalls unterstützt durch mechanische Einwirkungen und die Einwirkung von Schwerkraft. Das Problem bei diesen Ausrichtstrecken liegt jedoch darin, dass es nicht immer gelingt, alle der aufgegebenen Vorformlinge in die gewünschte Ausrichtung zu bringen. Die bekannte Ausrichtstrecke enthält deshalb eine Ausschleuseinrichtung, durch die nichtausgerichtete Vorformlinge aus dem Förderstrom entfernt werden. Da die mangelnde Ausrichtung in den überwiegenden Fällen nicht auf Qualitätsmängel der Vorformlige zurückzuführen ist, werden die ausgeschleusten Vorformlinge anschließend für einen erneuten Durchlauf der Ausrichtstrecke rückgeführt. Die bekannte Vorrichtung enthält eine Ausschleuseinrichtung, die einen Schacht enthält, in den die nicht-ausgerichteten Vorformlinge ausgeschleust werden. Der Schacht endet über einem Rückförderband, der die Vorformlinge zurück in einen Sammelbehälter fördert, der von der vorangegangenen Herstellungsmaschine der Vorformlinge, gefüllt wird. Aus diesem Vorratsbehälter fördert ein Zufuhrförderer die Vorformlinge zur Eingangsseite der Ausrichtstrecke, wo rückgeförderte Vorformlinge und neu hergestellte Vorformlinge durch den gleichen Förderer gemeinsam auf die Ausrichtstrecke aufgebracht werden. Es ist jedoch in der Praxis oft so, dass die Herstellungsmaschinen oder Vorratsbehälter der Vorformlinge örtlich weit entfernt von der Ausrichtstrecke aufgestellt werden müssen, so dass sich lange Förderwege für die Rückführung ergeben.

Aus der US 7 322 458 B1 ist eine gattungsgemäße Vorrichtung zum Orientieren und zur Zuführung von Vorformlingen bekannt.

Der Erfindung liegt die Aufgabe zu Grunde, eine Vorrichtung bereitzustellen, das eine konstruktiv wenig aufwendige Rückführung nicht-ausgerichteter Vorformlinge gestattet, und zwar unabhängig vom räumlichen Abstand zwischen der Ausrichtstrecke und der vorangegangenen Herstellungsmaschine oder dem Vorratsbehälter.

Die Aufgabe wird durch die in dem Anspruch 1 angegebenen Merkmale gelöst.

Die erfindungsgemäße Vorrichtung bietet den Vorteil, dass angeförderte Vorformlinge der Ausrichtstrecke vor der Ausschleuseinrichtung entnommen werden können. Dies ist besonders zweckmäßig beim Wechsel von Vorformlingen (andere Form, andere Größe oder dergleichen), da auf diese Weise nicht gewartet werden muss, bis die gesamte Ausrichtstrecke einschließlich der Rückführung leergelaufen ist. Diese Möglichkeit kann bei Vorrichtungen zum Ausrichten von Gegenständen eingesetzt werden, bei denen der Rückführförderer nicht direkt mit der Eingangsseite der Ausrichtstrecke verbunden ist.

Die Entnahmeeinrichtung wirkt besonders effektiv, weil sie im Bereich zwischen dem Zufuhrförderer und der Ausrichtstrecke vorgesehen ist und eine Weiche enthält, mit der der ankommende Strom der Vorformlinge umgeleitet und beispielsweise in einen Aufnahmebehälter eingeleitet wird.

Vorteilhafte Weiterbildungen der Erfindung sind den Unteransprüchen zu entnehmen.

Dadurch kann die Rückführung von der Zuführung der neuen Gegenstände, die die Ausrichtstrecke noch nicht durchlaufen haben, abgekoppelt werden, und die nicht-ausgerichteten, ausgeschleusten Vorformlinge können direkt der Eingangsseite der Ausrichtstrecke zugeführt werden. Auf diese Weise erfolgt die Rückführung im Wesentlichen lediglich über die Länge der Ausrichtstrecke, so dass die Vorrichtung konstruktiv vereinfacht werden kann. Aber auch verfahrenstechnische Vorteile sind gegeben, da ausgeschleuste Vorformlinge die Eingangsseite der Ausrichtstrecke sehr schnell erreichen, so dass beispielsweise beim Abschalten der Maschine oder beim Wechsel der auszurichtenden Gegenständen nicht erst gewartet werden muss, bis alle ausgeschleusten Gegenstände den gesamten Weg bis zur Herstellungsmaschine bzw. bis zu deren Vorratsbehälter zurückgelegt haben.

Von besonderem Vorteil ist es, wenn die Ausschleuseinrichtung einen Sammelbehälter aufweist, so dass eine Rückführung erst dann erfolgt, wenn eine ausreichende Anzahl oder Menge ausgeschleuster Vorformlinge vorhanden ist. Damit wird eine definierte Menge bereitgestellt, was in Verbindung mit der Steuerung des Zufuhrförderers immer eine konstante Beschickung der Ausrichtstrecke mit Vorformlingen in vorzugsweiser linearer Abhängigkeit zur Maschinenleistung gewährleistet.

Zum Aufnehmen der beiden Ausgangsseiten des Zufuhrförderers und des Rückförderers enthält die Eingangsseite der Ausrichtstrecke bevorzugt einen Fördertrichter, um ein kontrolliertes Aufgeben der Vorformlinge zu erreichen.

Wenn die erfindungsgemäße Vorrichtung mit voller Kapazität läuft, d.h. der Zufuhrförderer genau so viele Vorformlinge pro Zeiteinheit anfördert, wie von der Ausrichtstrecke bewältigt werden kann, so ist es vorteilhaft, einen Signalgeber vorzusehen, der die Anwesenheit von aus dem Rückfuhrförderer stammenden Vorformlingen im Bereich der Eingangsseite der Ausrichtstrecke feststellt und die Durchsatzleistung (Geschwindigkeit/Zahl der Vorformlinge) des Zufuhrförderers entsprechend der angeförderten Menge an rückgeführten Vorformlingen reduziert.

In gleichem Maße vorteilhaft ist ein weiterer Signalgeber im Bereich des Sammelbehälters der Ausschleuseinrichtung, der den Rückführförderer steuert, so dass dieser erst dann in Betrieb gesetzt werden muss, wenn sich eine ausreichende Anzahl nicht-ausgerichteter Vormformlinge im Sammelbehälter befindet.

Auf konstruktiv einfache Weise ist die Weiche als umstellbarer Boden eines Fördertrichters ausgebildet.

Ein Ausführungsbeispiel der Erfindung wird nachfolgend anhand der Zeichnungen näher erläutert. Es zeigen:
- Fig. 1: eine Vorderansicht einer erfindungsgemäßen Vorrichtung,
- Fig. 2: die Rückseite der Vorrichtung gemäß Figur 1, und
- Fig. 3: eine vergrößerte Schnittdarstellung III-III aus Figur 2.

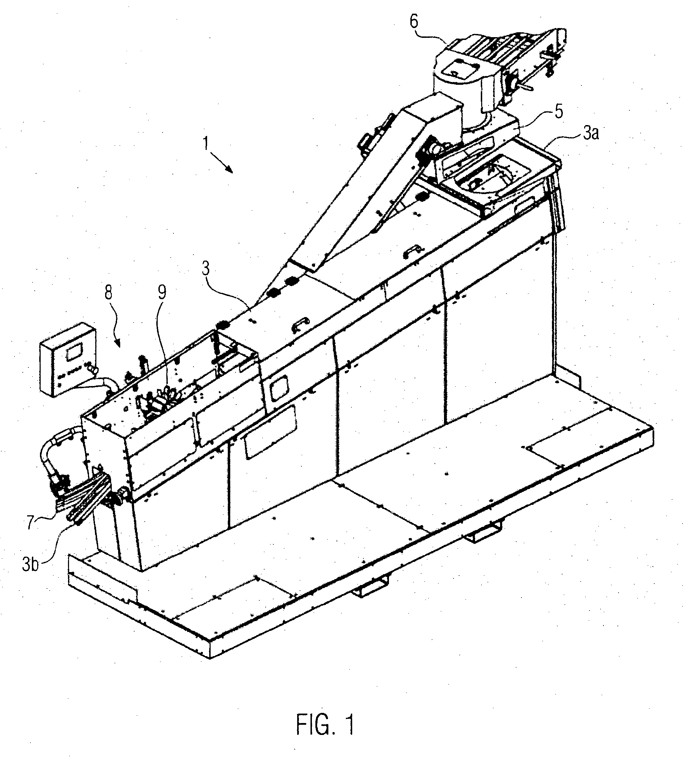

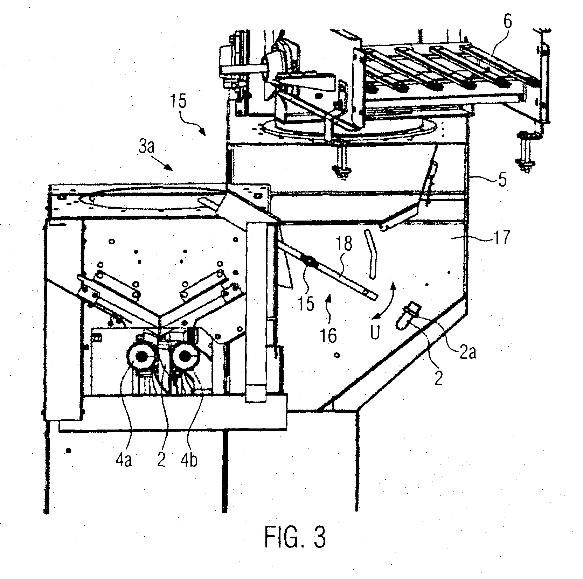

Die Figuren 1 bis 3 zeigen in unterschiedlichen Darstellungen eine Vorrichtung 1 zum Ausrichten von Gegenständen, die im vorliegenden Ausführungsbeispiel Vorformlinge 2 (Figur 3) sind, wie sie bei der Herstellung von Kunststoffbehältern, wie beispielsweise Kunststoffflaschen, als sogenannte "Preforms" bereitgestellt und einer Blasmaschine zugeführt werden, die aus den Vorformlingen 2 Behälter, wie beispielsweise Kunststoffflaschen, fertigt. Die Prinzipien der vorliegenden Anmeldung sind jedoch auch bei der Handhabung anderer Gegenstände einsetzbar.

Die Vorrichtung 1 enthält eine Ausrichtstrecke 3, die von herkömmlicher Konstruktion und an die sortierenden Gegenstände angepasst ist, und die beispielsweise zum Sortieren von Vorformlingen 2 als Rollensortierer bekannter Art ausgebildet sind. Rollensortierer enthalten zwei Walzen bzw. Walzenreihen 4a, 4b, die sich in einen axialen Abstand gegenüberliegen, in der der zu sortierende Vorformling 2 nur in einer bestimmten Ausrichtung eintreten kann, und in der er beispielsweise durch den üblicherweise bei Vorformlingen vorhandenen Halsbund 2a gegen ein Durchrutschen gesichert wird.

Die Ausrichtstrecke 3 verläuft zwischen ihrer Eingangsseite 3a und ihrer Ausgangsseite 3b schräg abwärts, so dass eine Schwerkraftunterstützung für das Ausrichten und das Fördern der Vorformlinge 2 gegeben ist. An der Eingangsseite 3a befindet sich ein Fördertrichter 5, in den die auf einem Zufuhrförderer 6 ankommenden Vorformlinge 2 in die Ausrichtstrecke 3 eingebracht werden. Der Zufuhrförderer 6 verbindet bevorzugt eine Herstellungsvorrichtung für Vorformlinge direkt mit der Eingangsseite 3a der Ausrichtstrecke 3; es ist jedoch auch möglich, die Vorformlinge mit Hilfe des Zufuhrförderers 6 aus einem Vorrat heranzubringen.

Die vom Zufuhrförderer 6 herangebrachten Vorformlinge 2 gelangen über den Trichter 5 in die Ausrichtstrecke 3 und werden dort in der oben skizzierten Weise ausgerichtet und verlassen die Ausgangsseite 3b der Ausrichtstrecke 3 über einen Förderer 7, der sie zur Weiterverarbeitung, d.h. insbesondere in eine Blasmaschine, bringt.

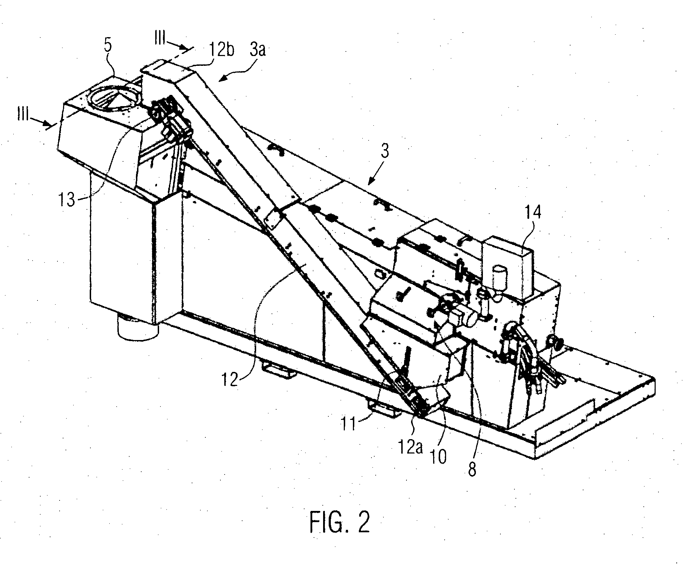

An der Ausgangsseite 3b der Ausrichtstrecke 3 ist eine Ausschleuseinrichtung 8 vorgesehen. Die Ausschleuseinrichtung 8 enthält bevorzugt eine Ausblaseinrichtung sowie andere Einrichtungen, die zum Entfernen von nicht-ausgerichteten Vorformlingen aus dem Förderstrom der ausgerichteten Vorformlingen geeignet ist. Im dargestellten Ausführungsbeispiel ist eine Abstreifeinrichtung 9 in Form eines sogenannten "Kickerrades" dargestellt, mit dessen Hilfe ineinandersteckende oder sonst wie aneinander haftende Vorformlinge getrennt werden können. Die nicht-ausgerichteten Vorformlinge, die sich auf den Strom der ausgerichteten Vorformlingen ablagern, werden dann durch die Ausblaseinrichtung 8 in einen in Figur 2 dargestellten Sammelbehälter 10 geblasen. Dort werden sie zunächst gesammelt, bis eine vorbestimmte Anzahl an Vorformlingen im Behälter 10 angesammelt ist. Es ist bevorzugt ein Signalgeber 11 vorgesehen, der ein Signal erzeugt, wenn diese vorbestimmte Anzahl oder Menge erreicht ist. Der Signalgeber 11 ist bevorzugt eine Lichtschranke, kann jedoch auch irgendeine Zähleinrichtung sein, die die ausgeblasenen Vorformlinge zählt oder kann auf andere Weise dem gewünschten Zweck dienen.

Die Ausschleuseinrichtung 8 ist mit einem Rückförderer 12 verbunden, dessen Eingangsseite 12a an der Unterseite des Sammelbehälters 10 und einer dort vorgesehenen Auslassöffnung beginnt. Der Rückförderer 12 führt von Ausschleuseinrichtung 8 schräg nach oben direkt zur Eingangsseite 3a der Ausschleusstrecke und mündet mit seiner Ausgangsseite 12b bevorzugt dort ebenfalls in den Fördertrichter 5. Auf diese Weise kommen die nicht-ausgerichteten und demzufolge ausgeschleusten Vorformlinge und die durch den Zufuhrförderer 6 herangebrachten Vorformlinge zusammen und gemischt in die Ausrichtstrecke 3 hinein.

Dem Rückförderer 12 ist ein weiterer Signalgeber 13, wiederum bevorzugt eine Lichtschranke, zugeordnet, mit dem festgestellt werden kann, ob sich im Rückführförderer 12 Vorformlinge 2 befinden.

Die Signalgeber 11, 13 sind mit einer Steuerung 14 verbunden, durch die die gesamte Vorrichtung 1 gesteuert werden kann.

Durch den weiteren Signalgeber 13 werden Probleme bei einer vollständigen Auslastung der Ausrichteinrichtung 3 vermieden, wobei bei dieser Auslastung die Zahl der vom Zufuhrförderer 6 herangebrachten Vorformlinge im Wesentlichen der Anzahl der Vorformlinge entspricht, die von der Ausrichteinrichtung 3 verarbeitet werden kann. Durch den weiteren Sensor 13 kann die Anwesenheit von aus dem Rückführförderer 12 stammenden Vorformlinge im Bereich der Eingangsseite 3a, insbesondere im Bereich des Zufuhrtrichters 5 festgestellt werden. Gemäß dem Signal dieses Signalgebers 13 können dann die Geschwindigkeiten des Zufuhrförderers 6 und/oder des Rückführförderers 12 so aneinander angepasst werden, dass die maximale Kapazität der Ausrichtstrecke 3 nicht überschritten wird. Der einfachste Weg dieser Steuerung liegt beispielsweise darin, die Geschwindigkeit des Zufuhrförderers 6 zu drosseln, sobald der Signalgeber 13 die Anwesenheit zusätzlicher Vorformlinge signalisiert. Vorzugsweise wird der Zufuhrförderer 6 genau um die Fördermenge verlangsamt, welche durch den Rückführförderer 12 bereitgestellt wird.

Es ist jedoch auch möglich, für eine derartige Steuerung die Signale des ersten Signalgebers 11 zu verwenden, wenn die Geschwindigkeit des Rückführförderers 12 und die Anzahl der sich im Sammelbehälter 10 befindenden Vorformlinge bekannt ist.

Die Signale der Signalgeber 11 und 13 werden zu diesem Zweck an die Steuervorrichtung 14 übertragen, die gleichzeitig die Gesamtsteuerung der erfindungsgemäßen Vorrichtung 1 übernimmt und beispielsweise auf eine Anpassung an unterschiedlich geformte Vorformlinge oder Vorformlinge unterschiedlicher Dimension bewirken kann.

Wie insbesondere in Figur 3 dargestellt, ist weiterhin eine Entnahmevorrichtung 15 vorgesehen, durch die ankommende Vorformlinge 2 vorzeitig aus der Vorrichtung 1 entfernt werden können, so dass die Zeiten, die für das Umstellen von einer Art Vorformling auf eine weitere Art Vorformling benötigte Zeit reduzieren, da die Vorformlinge nicht mehr das gesamte System durchlaufen müssen. Die Einrichtung 15 ist von besonderem Vorteil mit der erfindungsgemäßen Vorrichtung einsetzbar, sie ist jedoch auch für Ausrichtstrecken mit herkömmlicher Rückführung brauchbar.

Die Entnahmeeinrichtung 15 befindet sich bevorzugt zwischen dem Zufuhrförderer 6 und der Eingabeseite 3a der Ausrichtstrecke 3, und ist im dargestellten Ausführungsbeispiel in der Art einer Weiche 16 ausgebildet, die wahlweise die Vorformlinge vom Zufuhrförderer 6 in die Ausrichtstrecke 3 bzw. vom Zufuhrförderer 6 in eine Auffangeinrichtung 17 leitet. Die Auffangeinrichtung 17 kann ein Förderer oder, wie dargestellt, ein Aufnahmebehälter sein. Die Weiche 16 enthält eine umstellbare Rutsche 18, die über eine horizontale, im Wesentlichen in der Mitte der Rutsche 18 angeordnete Schwenkachse 19 in Richtung des Doppelpfeils des U verschwenkbar ist.

In der in Figur 3 gezeigten Stellung steht die Rutsche 18 in einer Stellung, in der die Vorformlinge 2 in den Aufnahmebehälter geleitet werden, während der Eingang zur Ausrichtstrecke 3 gesperrt ist. Beim Umstellen der Weiche 16 bildet die Rutsche 18 hingegen den Boden des Fördertrichters 5, sperrt den Eingang zum Aufnahmebehälter 17 und gibt den Eingang zur Ausrichtstrecke 3 frei. Zweckmäßigerweise sind Arretierungseinrichtungen (nicht gezeichnet) vorgesehen, um die Weiche 16 in ihren jeweiligen Stellungen zu arretieren. Ebenso können sogenannte Freiraumüberwachungslichtschranken ein störungsfreies Umschalten sicherstellen.

In Abwandlung des beschriebenen und gezeichneten Ausführungsbeispiels können die konstruktiven Gegebenheiten der Vorrichtung an die Eigenarten der zu handhabenden Gegenstände angepasst werden. Statt eines Rollensortierers können beispielsweise andere Sortierkonstruktionen eingesetzt werden. Der Rückförderer kann Gurtbänder oder andere Förderer enthalten. Auch die Signalgeber können andere, geeignete Sensoren umfassen. Darüber hinaus können die beschriebenen Funktionen der Überwachung der Anwesenheit und der Förderbewegung der rückgeführten Behälter durch jeden der Signalgeber allein oder durch beide Signalgeber gemeinsam ausgeführt werden.

## Patentansprüche

1. Vorrichtung (1) zum Ausrichten von Gegenständen, insbesondere von Vorformlingen (2) zur Herstellung von Kunststoffbehältern, mit einer Ausrichtstrecke (3), auf deren Eingangsseite (3a) über einen Zufuhrförderer (6) die Vorformlinge (2) ungerichtet aufgegeben werden, mit einer Ausschleuseinrichtung (8) und einem Rückführförderer (12) zum Ausschleusen und Rückführen nicht-ausgerichteter Vorformlinge (2), und einer Auffangeinrichtung (17), **dadurch gekennzeichnet, dass** in Förderrichtung vor der Ausschleuseinrichtung (8) eine Entnahmeeinrichtung (15) für auf dem Zufuhrförderer (6) angeförderte Vorformlinge (2) vorgesehen ist und die Entnahmeeinrichtung (15) eine zwischen dem Zufuhrförderer (6) und der Ausrichtstrecke (3) angeordnete Weiche (16) enthält, die den Zufuhrförderer (6) wahlweise mit der Ausrichtstrecke (3) oder der Auffangeinrichtung (17) verbindet.

2. Vorrichtung nach Anspruch 1, **dadurch gekennzeichnet, dass** die Auffangeinrichtung (17) einen im Bereich der Eingangsseite (3a) der Ausrichtstrecke (3) angeordneten Aufnahmebehälter enthält.

3. Vorrichtung nach Anspruch 1 oder 2, **dadurch gekennzeichnet, dass** die Weiche (16) einen umstellbaren Boden eines Fördertrichters (5) enthält, in den der Zufuhrförderer (6) und der Rückführförderer (12) münden.

4. Vorrichtung nach wenigstens einem der vorherigen Ansprüche, **dadurch gekennzeichnet, dass** der Rückführförderer (12) die Ausschleuseinrichtung (8) direkt mit der Eingangsseite (3a) der Ausrichtstrecke verbindet.

5. Vorrichtung nach wenigstens einem der vorherigen Ansprüche, **dadurch gekennzeichnet, dass** die Ausschleuseinrichtung (8) einen Sammelbehälter (10) für ausgeschleuste Vorformlinge (2) aufweist, der mit der Eingangsseite (12a) des Rückförderers (12) verbunden ist.

6. Vorrichtung nach wenigstens einem der vorherigen Ansprüche, **dadurch gekennzeichnet, dass** der Eingangsseite (3a) der Ausrichtstrecke (3) ein Fördertrichter (5) zugeordnet ist.

7. Vorrichtung nach Anspruch 6, **dadurch gekennzeichnet, dass** in den Fördertrichter (5) die auf einem Zufuhrförderer (6) ankommenden Vorformlinge (2) in die Ausrichtstrecke (3) eingebracht werden.

8. Vorrichtung nach Anspruch 6, **dadurch gekennzeichnet, dass** in den Fördertrichter (5) die Ausgangsseite (12b) des Rückförderers (12) und der Zufuhrförderer (6) einmünden.

9. Vorrichtung nach wenigstens einem der vorherigen Ansprüche, **dadurch gekennzeichnet, dass** wenigstens ein Signalgeber (11, 13) vorgesehen ist, der die Anwesenheit von aus dem Rückführförderer (12) stammenden Vorformlingen (2) im Bereich der Eingangsseite (3a) der Ausrichtstrecke (3) feststellt.

10. Vorrichtung nach Anspruch 9, **dadurch gekennzeichnet, dass** eine Steuereinrichtung (14) vorgesehen ist, die die Fördergeschwindigkeit des Zufuhrförderers (6) in Abhängigkeit von einem Signal des wenigstens einen Signalgebers (11, 13) steuert.

11. Vorrichtung nach wenigstens einem der vorherigen Ansprüche, **dadurch gekennzeichnet, dass** wenigstens ein Signalgeber (11, 13) vorgesehen ist, der die Anwesenheit von ausgeschleusten Vorformlingen (2) im Bereich des Sammelbehälters (10) feststellt.

12. Vorrichtung nach Anspruch 11, **dadurch gekennzeichnet, dass** eine Steuereinrichtung (14) vorgesehen ist, die den Rückführförderer (12) in Abhängigkeit von einem Signal des wenigstens einen Signalgebers (11, 13) steuert.

## Claims

1. Device (1) for orienting objects, in particular preforms (2) for the manufacture of plastic containers, having an orientation section (3) where the preforms (2) are assigned to the entry side (3a) of said orientation section (3) in a non-oriented manner via a feeding conveyor (6), a discharge means (8) and a return conveyor (12) for discharging and returning non-oriented preforms (2) and a collecting means (17) **characterised in that** a withdrawal device (15) for preforms (2) supplied on the feeding conveyor (6) is provided in the direction of feed upstream of the discharge means (8) and the withdrawal device (15) contains a distributing guide (16) arranged between the feeding conveyor (6) and the orientation section (3) which connects the feeding conveyor (6) selectively with the orientation section (3) or the collecting means (17).

2. Device according to claim 1, **characterised in that** the collecting means (17) contains a receptacle arranged in the region of the entry side (3a) of the orientation section (3).

3. Device according to claim 1 or 2, **characterised in that** the distributing guide (16) contains an adjustable bottom of a feed hopper (5) into which the feeding conveyor (6) and the return conveyor (12) end.

4. Device according to at least one of the preceding claims, **characterised in that** the return conveyor (12) connects the discharge means (8) directly with the entry side (3a) of the orientation section.

5. Device according to at least one of the preceding claims, **characterised in that** the discharge means (8) has a collecting vessel (10) for discharged preforms (2) which is connected to the entry side (12a) of the return conveyor (12).

6. Device according to at least one of the preceding claims, **characterised in that** a feed hopper (5) is assigned to the entry side (3a) of the orientation section (3).

7. Device according to claim 6, **characterised in that** the preforms (2) arriving into the feed hopper (5) on a feeding conveyor (6) are introduced into the orientation section (3).

8. Device according to claim 6, **characterised in that** the outlet side (12b) of the return conveyor (12) and the feeding conveyor (6) end in the feed hopper (5).

9. Device according to at least one of the preceding claims, **characterised in that** at least one signal transmitter (11, 13) is provided which detects the presence of preforms (2) coming from the return conveyor (12) in the region of the entry side (3a) of the orientation section (3).

10. Device according to claim 9, **characterised in that** a controlling system (14) is provided which controls the feed rate of the feeding conveyor (6) depending on a signal of the at least one signal transmitter (11, 13).

11. Device according to at least one of the preceding claims, **characterised in that** at least one signal transmitter (11, 13) is provided which detects the presence of discharged preforms (2) in the region of the collecting vessel (10).

12. Device according to claim 11, **characterised in that** a controlling system (14) is provided which controls the return conveyor (12) depending on a signal of the at least one signal transmitter (11, 13).

## Revendications

1. Installation (1) pour assurer l'orientation d'alignement d'objets, notamment de préformes (2) pour la fabrication de contenants ou récipients en matière plastique, l'installation comprenant un parcours d'orientation d'alignement (3), sur le côté d'entrée (3a) duquel sont chargées de manière non orientées, les préformes (2) par l'intermédiaire d'un transporteur d'alimentation (6), l'installation comprenant également un dispositif d'éjection (8) et un transporteur de recyclage (12) pour éjecter et recycler des préformes (2) non orientées, ainsi qu'un dispositif de collecte (17), **caractérisée en ce que** dans la direction de transport, en amont du dispositif d'éjection (8), il est prévu un dispositif de prélèvement (15) pour des préformes (2) amenées par le transporteur d'alimentation (6), et le dispositif de prélèvement (15) contient un aiguillage (16), qui est agencé entre le transporteur d'alimentation (6) et le parcours d'orientation d'alignement (3), et qui relie le transporteur d'alimentation (6) sélectivement au parcours d'orientation d'alignement (3) ou au dispositif de collecte (17).

2. Installation selon la revendication 1, **caractérisée en ce que** le dispositif de collecte (17) comprend un conteneur de réception agencé dans la zone du côté d'entrée (3a) du parcours d'orientation d'alignement (3).

3. Installation selon la revendication 1 ou la revendication 2, **caractérisée en ce que** l'aiguillage (16) comprend un fond, de position inversable, d'une trémie de transport (5) dans laquelle débouchent le transporteur d'alimentation (6) et le transporteur de recyclage (12).

4. Installation selon l'une au moins des revendications précédentes, **caractérisée en ce que** le transporteur de recyclage (12) relie le dispositif d'éjection (8) directement au côté d'entrée (3a) du parcours d'orientation d'alignement.

5. Installation selon l'une au moins des revendications précédentes, **caractérisée en ce que** le dispositif d'éjection (8) comprend un conteneur de collecte (10) pour des préformes (2) ayant été éjectées, qui est relié au côté d'entrée (12a) du transporteur de recyclage (12).

6. Installation selon l'une au moins des revendications précédentes, **caractérisée en ce qu'**une trémie de transport (5) est associée au côté d'entrée (3a) du parcours d'orientation d'alignement (3).

7. Installation selon la revendication 6, **caractérisée en ce que** dans la trémie de transport (5), les préformes (2) arrivant par le transporteur d'alimentation (6) sont introduites sur le parcours d'orientation d'alignement (3).

8. Installation selon la revendication 6, **caractérisée en ce que** dans la trémie de transport (5) débouchent le côté de sortie (12b) du transporteur de recyclage (12) et le transporteur d'alimentation (6).

9. Installation selon l'une au moins des revendications précédentes, **caractérisée en ce qu'**il est prévu au moins un détecteur de signalisation (11, 13), qui détermine la présence de préformes (2) en provenance du transporteur de recyclage (12) dans la zone du côté d'entrée (3a) du parcours d'orientation d'alignement (3).

10. Installation selon la revendication 9, **caractérisée en ce qu'**il est prévu un dispositif de commande (14), qui commande la vitesse de transport du transporteur d'alimentation (6) en fonction d'un signal dudit au moins un détecteur de signalisation (11, 13).

11. Installation selon l'une au moins des revendications précédentes, **caractérisée en ce qu'**il est prévu au moins un détecteur de signalisation (11, 13), qui détermine la présence de préformes (2) ayant été éjectées, dans la zone du conteneur de collecte (10).

12. Installation selon la revendication 11, **caractérisée en ce qu'**il est prévu un dispositif de commande (14), qui commande le transporteur de recyclage (12) en fonction d'un signal dudit au moins un détecteur de signalisation (11, 13).
